# EUROPEAN PATENT APPLICATION

(11) **EP 1 918 112 A1**
(43) Date of publication of application: **07.05.2008**
(21) Application number: 06123487.8
(22) Date of filing: 03.11.2006
(51) Int. Cl.: B41J 2/505, G06K 15/10

(54) **Print smoothing method**

(71) Applicant: Mutoh Europe N.V., 8400 Oostende (BE)
(72) Inventor: Schaum, Martin, B-8670, Oostduinkerke (BE); Caus, Gunter, B-8400, Oostende (BE); Defever, Serge, B-8460, Oudenburg (BE); Vierstraete, Bruno, B-8470, Snaaskerke (BE)
(74) Representative: pronovem

(57) **Abstract**

In a method of dot matrix printing, a swath of ink dots is laid down on a printable medium during a pass of a printing head. The dots represent a portion of the print data of the image. The swath comprises a central zone (9) and a peripheral zone (7,8), the central and peripheral zones extending along the swath and the average concentration (1) of ink dots in the peripheral zone is lower than the average concentration of ink dots in the central zone. At least the peripheral zone is overlapped by a subsequent swath, which at least partially compensates the lower average concentration of ink dots. The concentration of ink dots in the peripheral zone gradually decreases from a higher concentration at the border with the central zone towards zero at the border of the swath.

## Description

### Field of the Invention

The present invention is related to dot matrix printing methods and dot matrix printers. More particularly, the present invention is related to an ink jet printing method and ink jet printer preventing the occurrence of visible banding.

### State of the Art

High speed printing with ink jet printers is nowadays limited by the incapability of the used ink to dry fast enough. Furthermore, stepping mismatches (variations in paper feed steps) and miss-firing nozzles show up in the printed image via ink bleeding and various types of banding. These image defect phenomena show a repetitive pattern and/or a geometry which is easily recognizable by the human eye.

An ink jet printer has a printing head comprising a plurality of nozzles from where ink is fired onto a printable medium. The nozzles are generally ordered in one or more arrays. The printing head moves fastly in a fast scanning direction, generally coinciding with the width of the printable medium. The printing head also moves relatively to the printable medium in a slow scanning direction, generally perpendicular to the fast scanning direction. Movement in the slow scanning direction occurs in discrete steps, i.e. after a fast scan, the printing head moves relatively to the printable medium in the slow scanning direction towards a consecutive position after which a fast scan may be executed. A fast scan is generally referred to as a pass. Ink may be fired from the nozzles during a pass. Ink fired repetitively from one nozzle during a pass, appears on the printable medium along a line. This line is called a raster line.

On a traditional dot matrix printer, a family of printers to which an ink jet printer belongs, an image is recorded (formed) on a printable medium by printing a series of complementary rectangularly shaped stripes (also called bands, passes or swaths). These rectangular stripes are printed adjacent to each other, or may even overlap to a certain degree. In the overlap portion of a pass, raster lines in between existing raster lines are printed so as to increase the resolution of the printed image.

If the previously printed swath is still wet, there is a flow of the ink from the last printed swath to the previous one (referred to as ink bleeding). This flow creates a region in the last printed swath, adjacent to the previously printed swath, with a low ink concentration, and a region in the previously printed swath with a high ink concentration. The result is the occurrence of clearly visible stripes in the print, also called banding. Furthermore, the adjacent swath printing technique needs an exact step-adjust. When two swaths overlap the ink concentration in the overlapped zone increases and also causes banding. In case of a spacing between two adjacent swaths, this gap is also clearly visible.

Ink jet printing equipment manufacturers have put forward a number of dot printing strategies in order to overcome the phenomenon of banding. Patent US 6679583 discloses a method of interstitial printing in the fast scanning direction. Adjacent dots on a raster line are recorded on the printable medium by a different nozzle, during a different pass. Positioning errors of the nozzles with reference to the printable medium are hence randomized. Dots from defect nozzles are less likely to be visibly apparent, because the neighbouring dots originate from a different nozzle. Patent US 7093925 discloses a method of printing in which for each pass only a subset of an array of nozzles is used for printing. This subset is changed after a number of printed passes.

These prior art methods still present some drawbacks as far as printing speed and efficient use of available nozzles are concerned. Moreover, they do not fully eliminate banding phenomena.

### Aims of the Invention

The present invention aims to provide a dot matrix printing method that reduces visible banding in images, while retaining high printing speeds, thereby overcoming the drawbacks of prior art methods. The present invention equally aims to provide an apparatus implementing said method.

### Summary of the Invention

The present invention is related to dot matrix printing methods and to dot matrix printers, as set out in the appended claims, which reduce the occurrence of visible banding. According to a first aspect of the invention, there is provided a method of dot matrix printing an image, the method comprising the step of laying down on a printable medium a first swath of ink dots, during a first pass of a printing head. The dots represent a portion of print data of the image. The first swath comprises a central zone and a peripheral zone; said central and peripheral zones extend along the swath. The average concentration of ink dots in the peripheral zone is lower than the average concentration of ink dots in the central zone. The method further comprises the step of laying down on the printable medium one or more additional swaths of ink dots during following passes of the printing head. Said one or more additional swaths overlap the peripheral zone of the first swath, thereby increasing the average concentration of ink dots in said peripheral zone in order to obtain a substantially equal concentration of ink dots in said peripheral and central zones.

Said substantially equal concentration is interpreted in view of the print data, in that the total concentration of ink dots laid down by the different swaths must coincide with the concentration as defined in the print data of the image. The print data has preferably the same resolution as the printing head. The print data may be a subset of print data of the image, said subset having the same resolution as the printing head.

Preferably, in the method of the invention, each one of said one or more additional swaths comprises a central zone and a peripheral zone, said central and peripheral zones extending along the swath. Furthermore, the average concentration of ink dots in the peripheral zone is lower than the average concentration of ink dots in the central zone and the peripheral zones of said one or more additional swaths overlap the first swath.

More preferably, the concentration of ink dots in the peripheral zone gradually decreases from the border with the central zone towards the border of the swath.

According to a preferred embodiment, the method of the invention comprises the consecutive steps of:
(i) applying a mask to a first portion of the print data of the image, (ii) recording only the unmasked print data of said first portion of print data, thereby recording a first swath, (iii) subtracting the unmasked data from the print data after the recording step, (iv) applying said mask to a second portion of the print data partially overlapping the first portion and (v) recording only the unmasked print data of said second portion of print data, thereby recording a second swath.

Preferably, the method of the invention further comprises the step of providing a mask comprising a first zone which unmasks all the print data covered by said first zone and a second zone which unmasks a portion of the print data covered by said second zone in order to gradually reduce the concentration of ink dots towards a border of the swath.

More preferably, said print data comprises data related to multiple colour channels. In said step of applying a mask, a different mask is applied to each of the print data related to a different colour channel.

Even more preferably, the method comprises the steps of: dividing the print data into complementary subsets of print data, each of said subsets having a resolution equal to the resolution of the printing head and interleaving the printing of said subsets of print data.

Preferably, the outer border of the peripheral zone is a straight line. Equally preferably, the outer border of the peripheral zone follows the shape of a predefined function, preferably a sine.

According to a second aspect of the invention, there is provided a dot matrix printer for implementing the printing method of the invention. The dot matrix printer of the invention comprises: means for receiving print data and a printing head supplied with ink for recording the print data on a printable medium in the form of ink dots. The printing head is arranged for performing a fast scan over the printable medium in a first direction and a slow scan over the printing medium in a second direction, whereby the printing head records the print data in partially overlapping swaths, said swaths extending along the first direction. The dot matrix printer according to the invention further comprises means for reducing the average concentration of the ink dots in a peripheral zone of the swath, with reference to a central zone of said swath, said peripheral and central zone extending along said first direction.

Preferably, said means for reducing the average concentration of the ink dots are arranged for gradually decreasing the concentration from the border with the central zone towards the border of the swath.

More preferably, said means for reducing the average concentration of the ink dots are arranged for applying a mask stepwise to the print data. The mask may be provided in hardware; it may equally be provided in software.

According to a preferred embodiment of the invention, the dot matrix printer is arranged for printing multiple colour channels and said means for reducing the concentration of the ink are arranged for applying a different mask for each of the colour channels.

### Brief Description of the Drawings

Figure 1 represents the maximal ink concentration in a cross-sectioned swath.

Figure 2 represents the maximal ink concentration of adjacent, overlapping swaths.

Figure 3 represents the maximal ink concentration when ink bleeding phenomena occur at the border between two adjacent swaths.

Figure 4 represents how to smooth ink bleeding by overlap of different swaths.

Figure 5 represents swath borders having a wave-like shape, with and without smoothing function applied.

Figure 6 represents an implementation of print smoothing by application of a bitmap mask on the print data.

Figures 7 and 8 represent cases where parts of the image are smooth filtered more than once or not filtered at all.

### Detailed Description of the Invention

According to one aspect, the invention minimizes the occurrence of banding phenomena by applying a smoothing filter. According to a second aspect of the invention, the print quality can further be visibly enhanced by application of a swath shaping method.

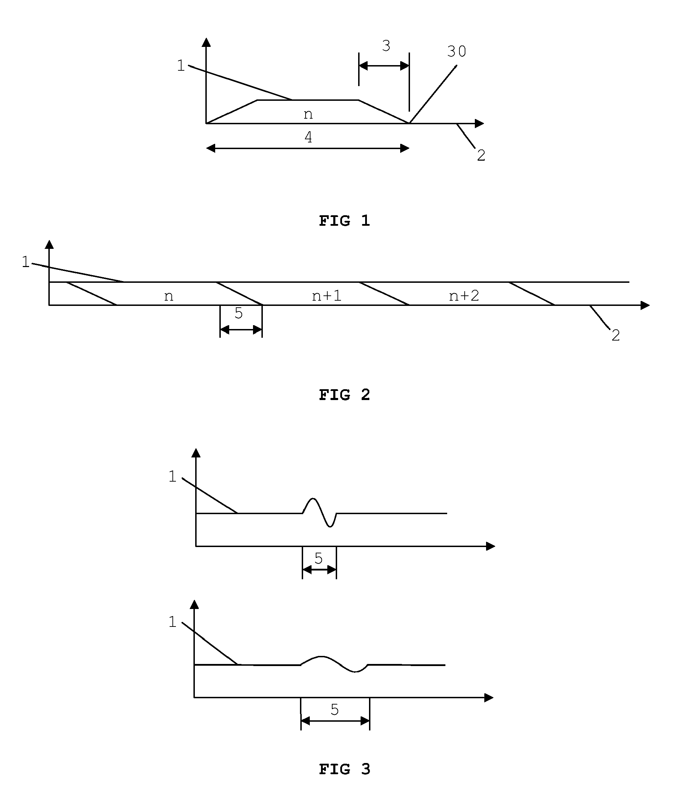

The smoothing filter works as follows. Figure 1 represents the ink concentration 1 that can maximally be deposited in one pass (maximal ink concentration) versus the slow scan direction 2. In order to reduce the negative side effects of the long ink drying time, a portion 3 of a swath 4 can be printed with decreased ink concentration. The portion 3 of the swath may be adjustable in size. The ink concentration within this portion may decrease gradually to zero, where zero concentration is achieved at the border 30 of the swath. By printing adjacent swaths with an overlap 5 equal to the size of the portion 3 of decreased ink concentration, a uniform maximal ink concentration can be achieved in the ideal case of no ink bleeding and good step adjust, as represented in figure 2. The adjacent swaths n, n+1, n+2,... overlap by an amount equal to the portion 3 of decreased ink concentration. As shown in the upper graph of figure 3, in reality, due to ink bleeding the ink concentration 1 is not constant in the overlap region 5, but rather follows the indicated profile. However, the profile of the concentration smoothens when the amount of overlap 5 is enlarged - and hence also the size of portion 3 is enlarged. This is shown in the lower graph of figure 3.

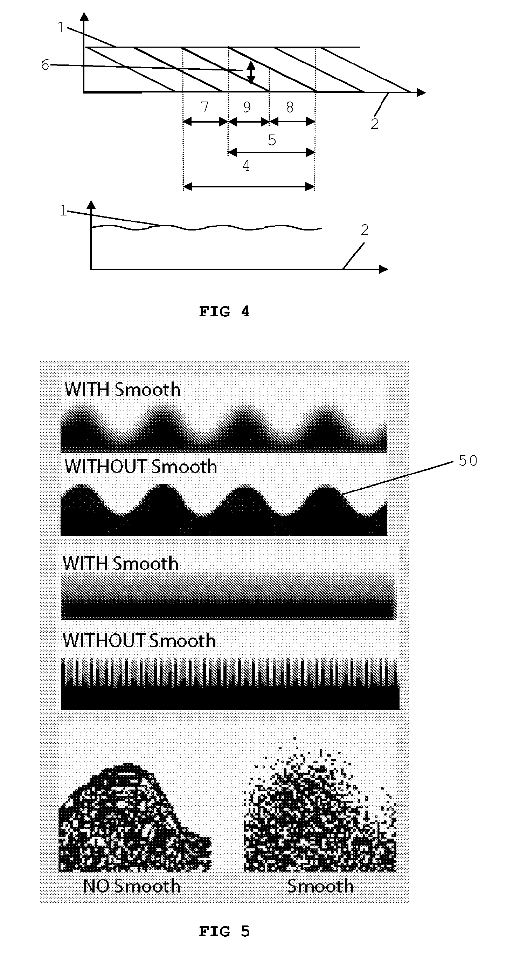

When the overlap 5 is equal to half the width 4 of a swath, one half of the swath overlaps the preceding swath, and another half of the swath is overlapped by the subsequent swath. The amount of overlap 5 may be larger than half the width 4 of a swath, in which case a portion of the swath is overlapped by more than one other swath, as shown in figure 4. This allows to smoothen the ink concentration profile 1 even more. The amount of overlap 5 should be chosen in function of the drying characteristics of the ink and of the kind of printable medium (e.g. type of paper). The profile of the ink concentration in the overlap region 3 may have any shape, as long as the superposed profiles of the overlapping swaths equal the final ink concentration. The final ink concentration is defined as the ink concentration in the case of no smoothing and no overlap, such that all ink would have to be deposited in one, not smoothed swath.

The example of figure 4 shows the case in which two or more overlapping swaths are needed in order to arrive at the final ink concentration. In other words, the overlapped zone 5 ( see also zone 5 in figure 2 ) is more than half a band and none of the swaths comprises a no-overlap zone. Referring to figure 4, each swath has one or more (peripheral) zones 7 and 8 in which the ink concentration is lower than the ink concentration in another (central) zone 9. In the particular case of figure 4, the latter, central zone 9 shows a constant ink concentration 6, being the maximal ink concentration of the swath (which is deposited in one pass). However, depending on the ink concentration profile in an overlap zone, the ink concentration is not necessarily constant within such a central zone. Central and peripheral zones do not necessarily coincide with overlap and no-overlap zones.

The application of the smoothing filter of the invention has 3 major advantages:
- zones of high ink concentration of the actual swath never touch zones of high ink concentration of a previous swath,
- the banding created by a wrong step adjust is averaged over the whole overlapped zone,
- if the width of the overlap is larger than half the width of a swath, the maximal ink concentration per swath can be controlled by adjusting the size of the overlapped zone.

In a number of cases, the application of a smoothing filter still does not fully eliminate visible banding. For these cases, the invention proposes to apply the smoothing filter in combination with a swath shaping printing method. In the swath shaping method, the longitudinal borders of a swath have the shape of a pattern (e.g. a sinus). Should banding occur, than it is less recognizable for the human eye. The swath shaping method, used in combination with the smoothing filter of the invention, results in the overlapped zone being no longer rectangular, but following the shape of the swath's border.

In the swath shaping technique, the longitudinal border of a swath assumes a particular shape, as e.g. represented in figure 5. The shape 50 can be according to any function (e.g. sine), can be repetitive or not, etc. Any banding that may occur, does not follow a straight line, but follows the shape 50 of the border, which is less easily recognized by the human eye.

Figure 5 shows examples of swath borders according to only the swath shaping technique (without the smoothing filter) and to the swath shaping technique with smoothing filter applied. The smoothing filter actually blurs the swath's border. This blurred border, combined with the overlapping of adjacent swaths makes visible banding less likely to occur.

The combination of smoothing and swath shaping proves to be particularly effective when the size of the overlapped zone is smaller than half the width of the swath.

### Description of a Preferred Embodiment of the Invention

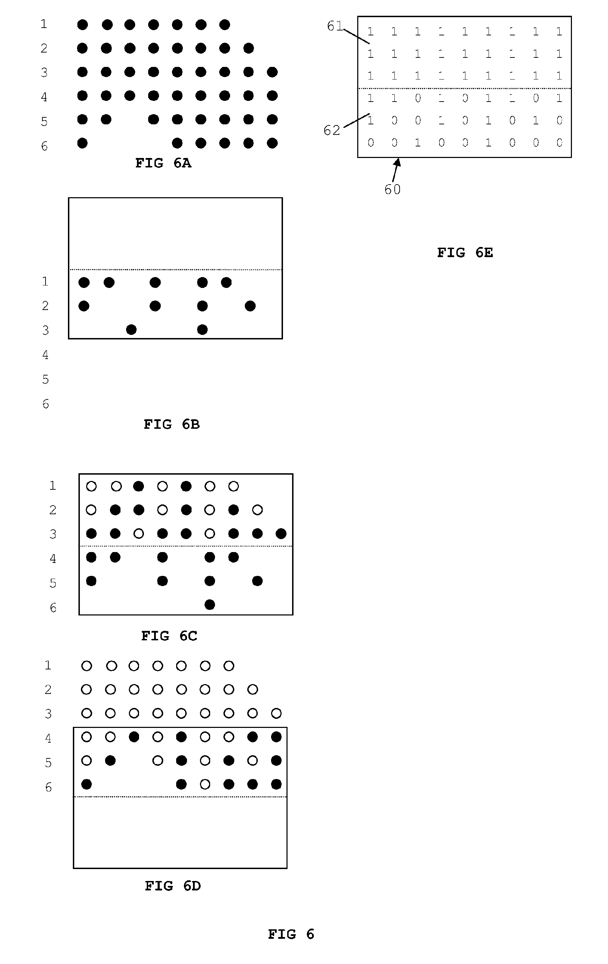

The smoothing filter may be implemented as follows. For each colour channel (e.g. cyan, magenta, yellow and black) a monochrome bitmap mask is set up. The bitmap mask represents all possible dots of one colour that can be recorded in one swath. Hence, the mask has the size of a swath. Each dot is represented by a bit. Bits set in this mask represent dots that may be recorded, not set bits represent dots that may not be recorded. There may be one bitmap mask for each colour channel of a swath. Figure 6E represents an example of a layout of a bitmap mask 60.

The bitmap mask is divided in two zones, extending along the entire length of the swath (the longitudinal direction of a swath coincides with the fast scan direction): a first zone 61 in which all bits are set (no-filter zone) and a second zone 62 in which some bits are not set (smoothing filter zone). In this context, a bit set as "1" is an unmasking bit, while a bit that is not set is a masking bit. The choice of which bits not to set depends on the selected smoothing profile. The minimal breadth of the no-filter zone is 1 dot.

The set of masks is subsequently applied to the print data. The print data corresponding to a determined colour channel is masked with its corresponding bitmap mask. A bitwise logical "AND" operation is carried out between corresponding bits of print data and bitmap mask. Hence, for the bits that are not set (the masked bits) in the bitmap mask, no dot is recorded. Bits that are not set in the print data are not recorded, no matter whether the corresponding bit in the bitmap mask is set or not.

After having recorded one swath, the effectively recorded dots are subtracted from the print data, leaving the dots that still are to be recorded. Subsequently, the set of masks is shifted in slow scan direction over the print data by the breadth of the no-filter zone and the bitmap mask is applied to those lines of print data, resulting in the data that will be recorded in a subsequent swath. The printing head equally performs one slow scan relatively to the printable medium, after which the subsequent swath can be recorded according to the method set out above. Hence, each colour channel in the print data is masked with the corresponding bitmap mask and dots corresponding with set bits are recorded.

The smoothing filter method is represented in a simplified manner in figure 6. Figure 6A represents an image that is to be printed, by recording a number of dots on a printable medium. The print data comprises six lines and only one colour channel (black). In figure 6, the image of figure 6A will be printed according to a smoothing filter method of the invention, by application of the bitmap mask 60 of figure 6E. Bitmap mask 60 comprises a no-filter zone 61, in which all bits are unmasked, and a zone 62 in which a smoothing filter is implemented, resulting in masked and unmasked bits. The smoothing filter in zone 62 lets the ink concentration degrade gradually towards the border of the mask. Hence, the recording of a first swath is represented in figure 6B. In figure 6B, only zone 62 of mask 60 is applied to the print data. Only the dots for which corresponding bits in bitmap mask 60 are set are recorded. The first three lines of the print data are only partially recorded, in accordance with the smoothing filter zone 62 of bitmap mask 60. The method subsequently proceeds to the printing of the next swath. Hence, the bitmap mask is shifted by an amount equal to the breadth of the no-filter zone 61, i.e. 3 lines. The recording of the second swath is represented in figure 6C. The empty dots represent those that have been recorded in the previous swath. The filled black dots are recorded in the present swath. The no-filter zone 61 now covers line 1 to 3 of the print data. The dots in line 1 to 3 that were not recorded in the previous swath because of the smoothing filter, are now all recorded (filled black dots). In the third swath, represented in figure 6D, the bitmap mask is further shifted three lines. The no-filter zone 61 now covers line 4 to 6 of the print data. As can be seen from the figure, the dots that were not recorded in the previous swath because of the smoothing filter, are now all recorded (filled black dots).

In practice, the size of the bitmap mask is much larger than the mask in the example of figure 6. In such large masks the bits in the smoothing filter zone may be masked according to any desired type of smoothing filter in order to gradually decrease the ink concentration towards the border of the mask (and hence, the border of the swath).

When the resolution of the print data is higher than the resolution of the printing head, the print smoothing method described above can still be applied. In the latter case, the print data is split into complementary subsets of print data, all having the same resolution as the printing head. These subsets overlap. The print smoothing method is applied to each of the above subsets of print data separately. Hence, consecutive swaths may not belong to the same subset of print data.

The breadth of the no-filter zone determines the slow scan step size. The breadths of the smoothing filter zone and the no-filter zone also determine the intensity of filtering of the print data. When the breadth of the smoothing filter zone is smaller than the breadth of the no-filter zone, portions of the print data will not be filtered. When the breadth of the smoothing filter zone is much larger than the breadth of the no-filter zone, the print data is filtered more than once. The more times the printing data is filtered the less ink is used per swath. By so doing an optimal balance between speed and quality may be determined.

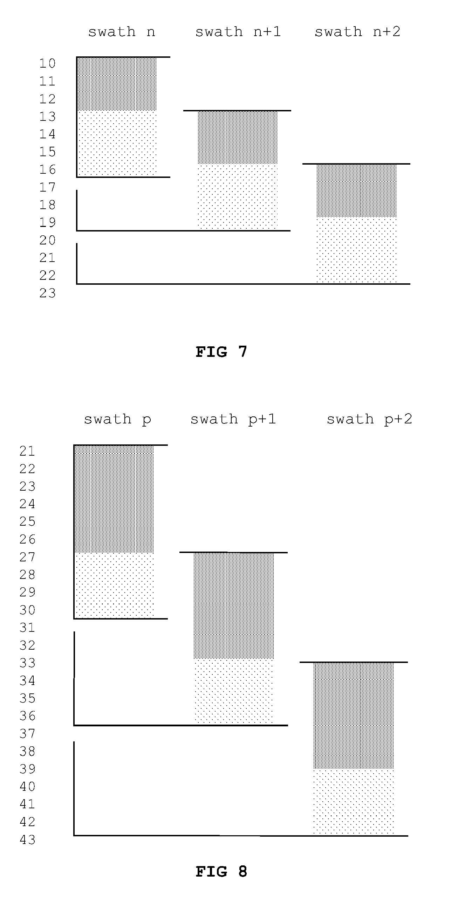

It is important to note that, depending on the breadths of the smoothing filter zone and the no-filter zone, not every portion of the print data may be filtered the same number of times. This is illustrated in figures 7 and 8. Figure 7 represents the case where the breadth of the no-filter zone is smaller than the breadth of the smoothing filter zone. In the particular example of figure 7, the no-filter zone extends over 3 lines (e.g. lines 10-12 for swath n) and the smoothing filter zone extends over 4 lines (e.g. lines 13-16 for swath n). For the recording of the subsequent swath n+1, the printing head moves over a distance equal to the breadth of the no-filter zone (three lines in the present example). As the smoothing filter zone is larger than the no-filter zone, a portion of the print data is filtered twice. In the example of figure 7, the print data of line 16 is filtered in swath n and also in the consecutive swath n+1. Figure 8 represents the case in which the breadth of the no-filter zone is larger than the breadth of the smoothing filter zone. In the particular example of figure 8, the no-filter zone extends over 6 lines (e.g. lines 21-26 for swath p) and the smoothing filter zone extends over 4 lines (e.g. lines 27-30 for swath p). For the recording of the subsequent swath p+1, the printing head moves over a distance equal to the breadth of the no-filter zone (six lines in the present example). As the smoothing filter zone is smaller than the no-filter zone, a portion of the print data is not filtered. In the example of figure 8, the print data of lines 31 and 32 is not filtered.

For most print resolutions it is sufficient to use the same bitmap mask for all colour channels. Depending on the scan speed, the type of printable medium, the amount of ink fired per nozzle and other factors, a finer gradient of the ink concentration is needed. In this case each colour channel may get a different bitmap mask. The only restriction is that the breadth of the no-filter zone has to be the same in all bitmaps of the set, as this breadth determines the slow scan step size. The overall smoothing is determined by the sum of all bitmaps of the set of masks. The set of masks can be designed according to particular needs, as long as the size of the no-filter zone is the same for all bitmap masks.

When a swath shaping pattern is used together with a smoothing filter, the swath shaping pattern may be integrated in the bitmap mask. In this case and without a smoothing filter applied, unmasked bits define a swath with a swath shaping pattern (e.g. having wave-like borders as in figure 5). A smoothing filter is then superposed on the swath shaping pattern. The smoothing filter zone of the bitmap mask may either be defined as a rectangular zone comprising the swath shaping pattern, or as a zone having a border of the same shape as the swath shaping pattern.

## Claims

1. A method of dot matrix printing an image, the method comprising the step of laying down on a printable medium a first swath of ink dots, during a first pass of a printing head, said dots representing a portion of print data of the image, wherein:
- said first swath comprises a central zone (9) and a peripheral zone (8), said central and peripheral zones extending along the swath,
- the average concentration of ink dots in the peripheral zone is lower than the average concentration of ink dots in the central zone,
the method further comprising the step of laying down on the printable medium one or more additional swaths of ink dots during following passes of the printing head, said one or more additional swaths overlapping the peripheral zone of the first swath, thereby increasing the average concentration of ink dots in said peripheral zone in order to obtain a substantially equal concentration of ink dots in said peripheral and central zones.

2. The method according to claim 1, wherein:
- said one or more additional swaths each comprise a central zone and a peripheral zone, said central and peripheral zones extending along the swath,
- the average concentration of ink dots in the peripheral zone is lower than the average concentration of ink dots in the central zone and
- the peripheral zones of said one or more additional swaths overlap the first swath.

3. The method according to claim 1 or 2, wherein the concentration of ink dots in the peripheral zone gradually decreases from the border with the central zone towards the border of the swath.

4. The method according to any one of the preceding claims, comprising the consecutive steps of:
- applying a mask (60) to a first portion of the print data of the image,
- recording only the unmasked print data of said first portion of print data, thereby recording a first swath,
- subtracting the unmasked data from the print data after the recording step,
- applying said mask to a second portion of the print data, partially overlapping the first portion and
- recording only the unmasked print data of said second portion of print data, thereby recording a second swath.

5. The method according to claim 4, further comprising the step of providing a mask comprising a first zone (61) which unmasks all the print data covered by said first zone and a second zone (62) which unmasks a portion of the print data covered by said second zone in order to gradually reduce the concentration of ink dots towards a border of the swath.

6. The method according to claim 4 or 5, wherein said print data comprises data related to multiple colour channels and wherein in said step of applying a mask, a different mask is applied to each of the print data related to a different colour channel.

7. The method according to any one of the preceding claims, wherein the outer border of the peripheral zone is a straight line.

8. The method according to any one of the claims 1 to 6, wherein the outer border of the peripheral zone follows the shape of a predefined function (50), preferably a sine.

9. A dot matrix printer comprising:
- means for receiving print data,
- a printing head supplied with ink for recording the print data on a printable medium in the form of ink dots, the printing head arranged for performing a fast scan over the printable medium in a first direction and a slow scan over the printing medium in a second direction, whereby the printing head records the print data in partially overlapping swaths, said swaths extending along the first direction and
- means for reducing the average concentration of the ink dots in a peripheral zone of the swath, with reference to a central zone of said swath, said peripheral and central zone extending along said first direction.

10. The dot matrix printer according to claim 9, wherein said means for reducing the average concentration of the ink dots are arranged for gradually decreasing the concentration from the border with the central zone towards the border of the swath.

11. The dot matrix printer according to claim 9 or 10, wherein said means for reducing the average concentration of the ink dots are arranged for applying a mask stepwise to the print data.

12. The dot matrix printer according to claim 11, for printing multiple colour channels and wherein said means for reducing the average concentration of the ink dots are arranged for applying a different mask for each of the colour channels.
